Europäisches Patentamt

European Patent Office

Office européen des brevets

(19)

(11) Veröffentlichungsnummer: **0 156 942**
**B1**

(12) **EUROPÄISCHE PATENTSCHRIFT**

(45) Veröffentlichungstag der Patentschrift:
23.09.87

(51) Int. Cl.⁴: **F 16 J 15/32, F 16 J 15/48**

(21) Anmeldenummer: **84108848.7**

(22) Anmeldetag: **26.07.84**

(54) **Dichtung.**

(30) Priorität: **19.03.84 DE 3409981**

(43) Veröffentlichungstag der Anmeldung:
**09.10.85 Patentblatt 85/41**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
**AU-B-1 667 076**
**DE-B-2 756 403**

(73) Patentinhaber: **Firma Carl Freudenberg, Höhnerweg 4, D-6940 Weinheim/Bergstrasse (DE)**

(72) Erfinder: **Hölzer, Helmut, Hegelstrasse 15, D-6940 Weinheim (DE)**

(74) Vertreter: **Weissenfeld- Richters, Helga, Dr., Höhnerweg 2, D-6940 Weinheim/Bergstrasse (DE)**

LIBER, STOCKHOLM 1987

## Beschreibung

Die Erfindung betrifft eine Dichtung für den Spalt zwischen einer Bohrung und einer durch diese hindurchgeführten Welle, bestehend aus einem flüssigkeitsdicht in der Bohrung gelagerten Außenring aus festem Werkstoff, der eine nach innen geöffnete, umlaufende Nut mit zwei axialen Begrenzungsflächen aufweist, sowie aus einem Innenring aus elastischem Werkstoff, der innerhalb der Nut flüssigkeitsdicht und verdrehsicher auf der Welle gelagert ist und der neben einem zylindrischen Mittelabschnitt zwei nach außen vorspringende Flansche aufweist, die jeweils einer der Begrenzungsflächen der Nut zugeordnet sind, wobei die Begrenzungsflächen einen sich in radialer Richtung nach außen verminderndem Abstand haben und wobei jeder der beiden Flansche jeweils an der zugeordneten Begrenzungsfläche gleitend anliegt.

Eine Dichtung der vorgenannten Art ist aus der DE-B- 27 56 403 bekannt. Der Innenring weist dabei im Bereich des Mittelabschnittes eine radiale Erstreckung auf, die im wesentlichen übereinstimmt mit dem radialen Abstand des Außenringes von der abzudichtenden Welle. Die Dichtung zeigt wenig befriedigende Gebrauchseigenschaften auf, wenn relativ hohe Differenzdrücke auftreten und betriebsbedingte Verlagerungen der abzudichtenden Welle.

Eine andere Dichtung wird in der DE-A- 26 14 888 gezeigt. Sie ist nicht für einen Dauerbetrieb bestimmt, sondern nur als Sicherung für den normalerweise dichtungslosen Spalt zwischen der Propellerwelle und einer Schiffsabschottung, wenn dieser in seltenen Ausnahmefällen von einer Seite mit Wasser beaufschlagt ist.

Das Wasser strömt dann in den Innenraum der Dichtung ein und bewirkt hier eine Druckerhöhung, die zur Anpressung des niederdruckseitigen Flansches an die zugehörige Begrenzungswand der Nut und damit zur Erzielung des gewünschten Abdichtungsergebnisses führt. Die dazu erforderliche Verformung des Flansches ist unmittelbar abhängig vom Differenzdruck zwischen der Hoch- und der Niederdruckseite der Dichtung. Niedrige und fehlende Differenzdrücke können daher die Anwendung einer solchen Dichtung schwierig bzw. sinnlos machen.

Darüber hinaus ist der bis zur Erzielung der notwendigen Anlage an dem Außenring erforderliche Verformungsgrad des Flansches des Innenringes abhängig von dem gegenseitigen Abstand zwischen beiden Teilen. Ist der Abstand variabel oder ungenau eingestellt, dann kann ein indifferentes Ansprechen der Dichtung hiervon die Folge sein. Es ist deshalb notwendig, den Abstand sehr präzise einzustellen und Abstandsveränderungen während des Betriebes als Folge von Wellenverlagerungen zu vermeiden. Zusätzliche Erschwernisse hinsichtlich der praktischen Benutzung einer solchen Dichtung sind hiervon die Folge.

Der Erfindung liegt die Aufgabe zugrunde, eine Dichtung der eingangs genannten Art derart weiterzuentwickeln, daß im Dauerbetrieb eine gute Betriebssicherheit auch dann erzielt wird, wenn relativ hohe Differenzdrücke vorhanden sind und wenn darüber hinaus axiale, radiale und/oder Winkelverlagerungen der abgedichteten Welle in bezug auf die aufnehmende Bohrung ständig auftreten. Diese Aufgabe wird erfindungsgemäß mit den kennzeichnenden Merkmalen des Patentanspruchs 1 gelöst. Auf vorteilhafte Ausgestaltungen nehmen die Unteransprüche Bezug.

Bei der erfindungsgemäßen Dichtung wird der Innenring in axialer Richtung durch den Außenring geführt. Er gleitet dadurch auf der abgedichteten Welle hin und her, wenn deren axiale Bewegungen das in axialer Richtung vorhandene Spiel zwischen dem Außenring- und dem Innenring überschreiten. Auch beim Auftreten von Winkelverlagerungen zwischen der Dichtung und der abzudichtenden Welle können sich entsprechend der Relativverlagerungen des Innenringes auf der Oberfläche der abzudichtenden Welle ergeben. Sie haben durch die relativ groß dimensionierte radiale Erstreckung des Mittelabschnittes in bezug auf den Abstand des Außenringes von der Welle in keinem Falle Deformationen des Innenringes zur Folge, die die Erzielung eines guten Abdichtungsergebnisses gefährden könnte.

Bei der vorgeschlagenen Dichtung sind die axialen Begrenzungsflächen der Nut des Außenringes konvergierend ausgelegt und haben somit mit zunehmender Entfernung von der Rotationsachse einen sich vermindernden Abstand voneinander. Die beiden nach außen vorspringenden Flansche des Innenringes liegen unter einer elastischen Vorspannung an den Begrenzungsflächen an, wobei die elastische Vorspannung insbesondere aus der elastischen Deformierung resultiert, die die Flansche während des Einfügens des Innenringes in den Außenring erfahren. Dieser Anteil an den Anpreßkräften ist konstant. Er wird indessen drüber hinaus ergänzt durch die Fliehkräfte, die sich in den Flaschen selbst ergeben, wenn diese als Bestandteil des Innenringes der Drehung der abgedichteten Welle folgen.

Die Flansche des Innenringes der vorgeschlagenen Dichtung haben somit ständigen Kontakt mit der jeweils zugehörigen Begrenzungsfläche des Außenringes. Ein Spalt im eigentlichen Sinne ist somit zwischen beiden nicht vorhanden. Die vorgeschlagene Dichtung ist daher ständig dicht, wobei es ohne jede Bedeutung ist, ob die Welle sich gerade in einer Drehbewegung befindet oder nicht.

Der Innenring besteht aus elastisch nachgiebigem Werkstoff und ist flüssigkeitsdicht und verdrehsicher, jedoch verschiebbar auf der Oberfläche der abgedichteten Welle festgelegt. Er enthält zwischen den beiden Flanschen einen zylindrisch ausgebildeten Mittelabschnitt. Dieser weist einen Außendurchmesser auf, der größer ist als der Innendurchmesser des Außenringes, wenigstens auf der druckabgewandten Seite der Nut. Zweckmäßig ist der Außendurchmesser zusätzlich größer als der Innendurchmesser des Außenringes auf beiden Seiten der Nut. Hierdurch wird eine gewisse Stabilisierung gegen Spaltaustrieb erzielt. Ein Verklemmen zwischen dem Innenring und dem Außenring ist daher nicht zu befürchten. Es ergibt sich vielmehr eine gute axiale Führung des Innenringes durch den Außenring auch dann, wenn axiale Verlagerungen während des laufenden Betriebes auftreten. Eine besondere Justierung des Innenringes während der Montage ist entbehrlich.

Die Gefahr des Auftretens von Spaltaustrieb steigt mit zunehmendem Differenzdruck, dem die Dichtung während des laufenden Betriebes ausgesetzt ist. Der diesbezüglichen Gefahr kann indessen entgegengewirkt werden durch eine Vergrößerung des Verhältnisses aus dem Außendurchmesser des Mittelabschnitts und dem Innendurchmesser des Außenringes auf der druckabgewandten Seite der Nut. Desweiteren können in den Mittelabschnitt axiale Verstärkungselemente aus einem festen Material eingebettet werden, die sich bis in die unmittelbare Nähe der Begrenzungsflächen erstrecken und die ggf. gleitend an denselben anliegen. Entsprechende Verstärkungselemente können beispielsweise gebildet werden durch gleichmäßig auf den Umfang verteilte Stifte aus Metall oder einen ggf. einvulkanisierten Abschnitt eines Rohres.

Die Begrenzungsflächen der Nut des Außenringes können durch konvergierende Kegelflächen gebildet werden, wobei in radialer Richtung nach außen wenigstens 2 Paar Kegelflächen mit sich verminderndem Kegelwinkel aufeinander folgen können. Im letztgenannten Falle resultiert zwischen den unmittelbar aufeinander folgenden Kegelflächen eines unterschiedlichen Kegelwinkels ein gewisser Abstand von der Oberfläche des zugeordneten Flansches, was das erzielte Abdichtungsergebnis verbessert.

Der Innenraum der vorgeschlagenen Dichtung ist unter Betriebsbedingungen mit abgedichtetem Medium gefüllt, diese vermag den Innenraum indessen nicht in Richtung der druckabgewandten Seite zu verlassen.

Das in dem Innenraum enthaltene, abgedichtete Medium verläßt den angesprochenen Bereich auch nicht bei einer vorübergehenden Stillsetzung der abgedichteten Welle. Bei erneuter Inbetriebnahme ist daher bereits vom ersten Moment an eine ausgezeichnete Schmierung der dynamisch aufeinander gleitenden Dichtflächen gewährleistet.

Der diesbezügliche Effekt kommt besonders wirkungsvoll zum Tragen, wenn die Begrenzungsflächen, bezogen auf die Rotationsachse konkav gewölbt sind, weil sich in diesem Falle im Bereich des Außendurchmessers der in die Nut eingreifenden Flansche eine gewisse Verminderung von deren Anpressung an die jeweils zugeordnete Begrenzungsfläche ergibt. Das in dem Innenraum der Dichtung enthaltene Flüssigkeitsvolumen vermag dadurch die aktiven Dichtungsflächen leichter zu erreichen und zu schmieren.

Nach einer anderen Ausgestaltung ist es vorgesehen, daß die Begrenzungsflächen, bezogen auf die Rotationsachse, konkav in sich gewölbt sind. Sie schließen als Folge hiervon im Bereich ihres Innendurchmessers einen steileren Winkel mit der Rotationsachse ein als im Bereich des Außendurchmessers, wobei die unterschiedlichen Neigungen gleichmäßig ineinander übergehen. Dichtungen dieser Art sind insbesondere geeignet für die Abdichtung hoher Drücke, wenn die Drehbewegung der Welle zusätzlich durch Axial-, Radial- und/oder Winkelbewegungen überlagert ist.

Der von dem abgedichteten Medium abgewandte Flansch des Innenringes kann mit hydrodynamisch wirkenden Rückförderelementen für Leckflüssigkeit versehen sein. Diese sind zweckmäßigerweise nicht auf der die zugehörige Begrenzungsfläche des Außenringes berührenden Dichtfläche vorgesehen, sondern auf dem Außendurchmesser des Flansches. Neben einer Verbesserung des Abdichtungsergebnisses wird hierdurch eine kontinuierliche Umwälzung des im Inneren der Dichtung enthaltenen Flüssigkeitsvolumens erreicht, was mit dazu beiträgt, Überhitzungen im Bereich der dynamischen Dichtungszonen zu verhindern.

Der Innenraum der Dichtung und insbesondere der Zwischenraum zwischen den beiden Flanschen kann bereits herstellungsbedingt mit einem Schmierstoff gefüllt sein. Als besonders geeignet hat sich diesbezüglich eine Mischung aus Graphit und Polyglykolöl erwiesen, in der der Graphitgehalt etwa 94 % beträgt. Bei relativ niedriger Viskosität ist der Feststoffgehalt dieser Mischung relativ hoch. Er bedingt neben ausgezeichneten Notlaufeigenschaften eine gute Dauerhaftigkeit.

Für die Herstellung des Innenringes können alle einschlägig verwendeten, ausreichend elastischen Werkstoffe Verwendung finden. Neben Gummi kommt insbesondere PTFE zur Anwendung, wobei zu berücksichtigen ist, daß bei häufig auftretenden, axialen Verschiebungen des Innenringes auf der Oberfläche der abgedichteten Welle in dem hier vorhandenen statischen Dichtungsbereich ein gewisser Verschleiß auftreten kann, der schließlich Undichtigkeiten zur Folge hat. Aus diesem Grunde ist es nach einer vorteilhaften Ausgestaltung vorgesehen, in dem Zwischenraum zwischen den Flanschen ein sekundäres Federelement anzuordnen, das unter einer elastischen Vorspannung auf dem Außenumfang des Mittelabschnitts anliegt. Abrieb und Relaxationserscheinungen des Mittelabschnittes werden hierdurch selbsttätig ausgeglichen. Als besonders vorteilhaft hat sich diesbezüglich die Verwendung einer Ringwendelfeder erwiesen, wie beispielsweise für die Anpressung der Dichtlippe üblicher Radialwellendichtringe gebräuchlich.

Der Innendurchmesser des Außenringes soll auf der dem abgedichteten Medium zugewandten Seite der Nut größer sein als auf der von dem abgedichteten Medium abgewandten Seite. Die radiale Erstreckung des in der Nut unter Betriebsbedingungen umlaufenden Flüssigkeitsringes genügt in diesem Falle nicht zum Überschreiten der die Nut auf der druckabgewandten Seite axial abschließenden Begrenzungsfläche. Eine Leckage ist daher von vornherein schon ausgeschlossen.

Die vorgeschlagene Dichtung läßt sich besonders einfach und damit kostengünstig herstellen und montieren. Die auch in diesem Falle vorhandenen dynamischen Dichtungszonen liegen innerhalb der Dichtung. Sie sind dadurch in mechanischer Hinsicht weniger gefährdet als bei anderen Ausführungen und geben dem Hersteller der Dichtung die Möglichkeit, durch spezielle Auswahl und Gestaltung der aufeinander gleitenden Komponenten sowohl in reibungstechnischer Hinsicht als auch in Hinsicht auf die Erzielung eines guten Abdichtungsergebnisses optimale Resultate zu erzielen.

In der in der Anlage beigefügten Zeichnung sind einige beispielhafte Ausführungen der vorgeschlagenen Dichtung dargestellt. Diese werden nachfolgend näher erläutert:

Es zeigen:

Fig. 1 Eine Dichtung mit einteilig hergestelltem Außenring aus Kunststoff, bei dem die nach innen geöffnete Nut in axialer Richtung durch kegelig ausgebildete Begrenzungsflächen abgeschlossen ist, die miteinander konvergieren.

Fig. 2 Eine Dichtung ähnlich der in Fig. 1 gezeigten, bei der der Außenring zweiteilig ausgeführt ist und 2 Paar in radialer Richtung aufeinander folgende Begrenzungsflächen aufweist.

Fig. 3 Eine Dichtung ähnlich der in Fig. 2 gezeigten, bei der die Begrenzungsflächen des Außenringes konkav in sich gewölbt sind und bei der der Innenring mit einer zusätzlichen Staublippe versehen ist.

Fig. 4 Eine Dichtung, bei der die Flansche einander berühren.

Bei der vorgeschlagenen Dichtung ruht, unabhängig von der speziellen Ausbildung, sowohl der Außenring als auch der Innenring regelmäßig unbeweglich in bzw. auf dem aufnehmenden Maschinenteil. Es sind daher weder zwischen dem Außenring und der aufnehmenden Bohrung noch zwischen dem Innenring und der Oberfläche der abgedichteten Welle im eigentlichen Sinne dynamische Abdichtungszonen vorhanden. Die Erzielung einer flüssigkeitdichten Verbindung zwischen den einzelnen Teilen ist daher einfach zu erzielen.

Bei der vorgeschlagenen Dichtung liegen, unabhängig von der speziellen Ausbildung, die nach außen weisenden Flansche 3, 4 des Innenringes stets unter einer elastischen Vorspannung an den zugehörigen Begrenzungsflächen 5, 6 des Innenringes an. Diese hat ihren Ursprung einerseits in der speziellen Gestalt des Innenringes und dessen Zuordnung zu dem Außenring, andererseits in den elastischen Eigenschaften des zu seiner Herstellung verwendeten Materials. Herstellungsbedingt können sich die Flansche 3, 4 beispielsweise parallel zueinander in radialer Richtung nach außen erstrecken, wobei der gegenseitige Abstand so bemessen ist, daß sich beim Einfügen in den Außenring eine gegeneinander gerichtete elastische Verformung der beiden Flansche ergibt und als Folge hiervon die erwünschte elastische Anpressung an die Begrenzungsflächen der Nut.

Bei Verwendung gummielastischer Werkstoffe für die Herstellung des Innenringes steht ein besonders großes Elastizitätspotential zur Verfügung. Sie neigen indessen stark zum Relaxieren, weshalb häufig der Anwendung von PTFE der Vorzug gegeben wird.

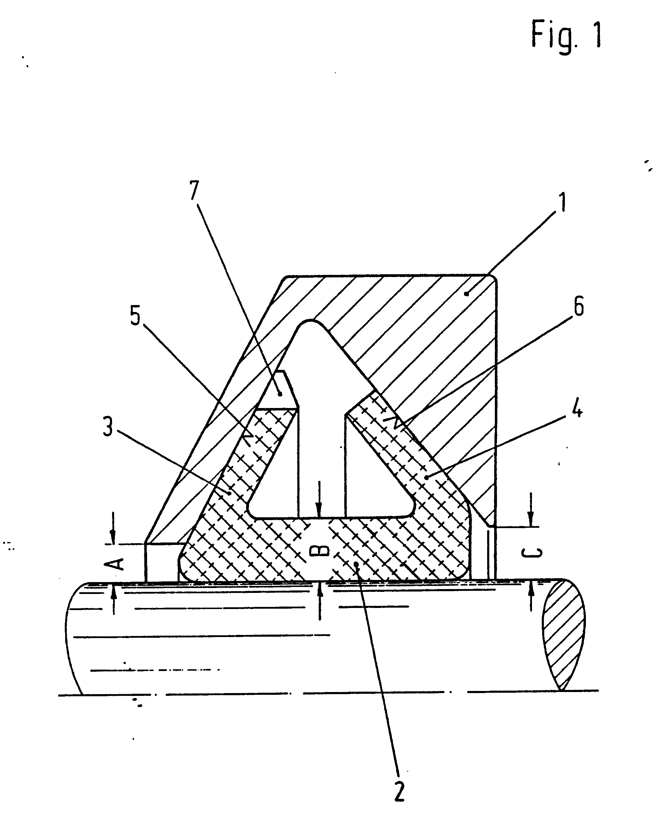

Bei der in Fig. 1 gezeigten Ausführung besteht der Innenring 2 aus Gummi einer HärteShore A von 76. Der Außenring 1 ist ein Formteil aus PTFE. Dieses weist eine nach innen geweitete Nut auf, in die der Innenring 2 eingeknöpft ist. Die Nut wird in axialer Richtung beiderseits durch die kegelig ausgebildete Begrenzungsflächen 5, 6 begrenzt, die miteinander konvergieren. Sie schließen mit der Rotationsachse einen Winkel von jeweils 60° ein und bewirken nach dem Einfügen des Innenringes 2 eine gegeneinander gerichtete elastische Deformierung der Flansche 3, 4 des Innenringes. Diese nehmen vor dem Zusammenfügen der beiden Teile eine zueinander parallele Lage ein.

Die größte axiale Länge des Innenringes 2 ist kleiner als die größte axiale Erstreckung der Nut des Außenringes. Der Innenring ist dadurch sowohl in axialer als auch radialer Richtung relativ zu dem Außenring beweglich.

Der Innenring 2 weist im Bereich seines Mittelabschnittes die radiale Dicke B auf. Der diesbezügliche Wert ist größer als die beiderseits anschließenden Abstände A und C des Außenringes von der Oberfläche der abgedichteten Welle. Axiale Verlagerungen der Welle, die das in axialer Richtung vorhandene Spiel überschreiten, führen dadurch zu einer axialen Verschiebung des Innenringes 2 auf der Oberfläche der abgedichteten Welle, ohne daß die Anpressung der Flansche 3, 4 an die zugehörigen Begrenzungsflächen der Nut wesentlich beeinflußt wird. Die Zuordnung des Innenringes zu dem Außenring bedarf daher auch während des Montagevorganges keiner besonderen Beachtung oder Justierung.

Der Abstand zwischen dem Außenring und der Oberfläche der abgedichteten Welle auf der der Außenluft zugewandten Seite der Dichtung A ist kleiner als der entsprechende Abstand C auf der druckbeaufschlagten Seite der Dichtung. Der bei laufender Welle im Innenraum der Dichtung mit umlaufende Flüssigkeitsring vermag dadurch den Dichtspalt nicht zu passieren.

Der auf der der Außenluft zugewandten Seite der Dichtung angeordnete Flansch 3 des Innenringes 2 ist auf der Außenseite mit gleichmäßig auf dem Umfang verteilten Rückförderrippen 7 versehen. Diese bewirken bei laufender Welle eine kontinuierliche Umwälzung des im Inneren der Dichtung enthaltenen Flüssigkeitsvolumens. Die im Bereich der dynamischen Abdichtungszonen entstehende Wärme kann dadurch leichter auf die angrenzenden Maschinenteile übertragen werden und damit abgeführt werden.

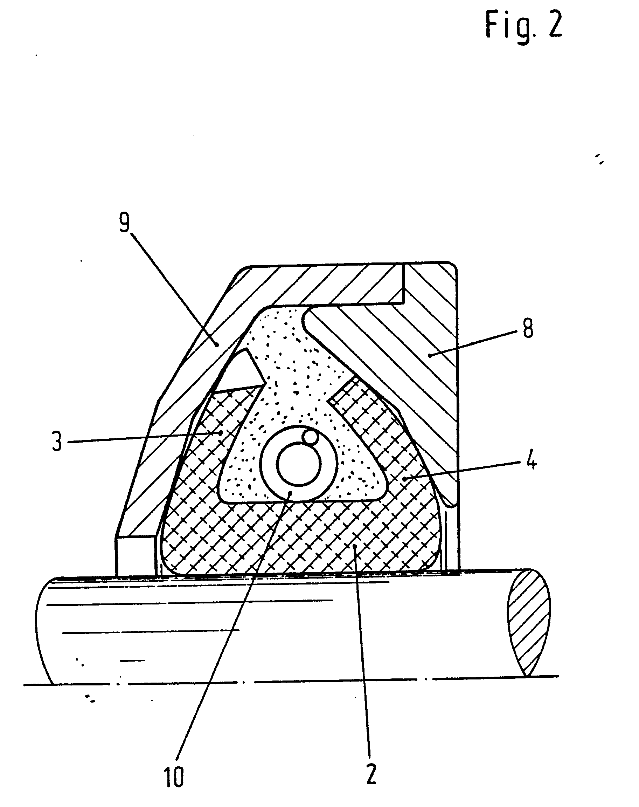

Die in Fig. 2 gezeigte Dichtung entspricht funktionell den vorstehenden Ausführungen. Der Außenring ist indessen zweigeteilt und umfaßt die beiden Teilringe 8, 9, die unlösbar und flüssigkeitsdicht verbunden sind.

Der Ring 9 besteht aus einem tiefgezogenen Stahlblech, der Ring 8 besteht aus einem Kunststoff-Formteil.

Die die in radialer Richtung nach innen geöffnete Nut in axialer Richtung abschließenden Begrenzungsflächen sind spiegelbildlich ausgelegt. Sie umfassen zwei in radialer Richtung aufeinander folgende Paare von Begrenzungsflächen, die miteinander konvergieren, und die innen einen Winkel von 80° mit der Rotationsachse einschließen, außen indessen einen Winkel von 60°.

Der Innenring besteht auch in diesem Falle aus Gummi und weist herstellungsbedingt zwei sich parallel zueinander erstreckende Flansche 3, 4 auf. Diese sind nach dem Einfügen des Innenringes in den Außenring in der dargestellten Weise gegeneinander abgebogen.

Der Mittelabschnitt des Innenringes 2 wird von einer Ringwendelfeder 10 gegen die Oberfläche der abgedichteten Welle gepreßt. Das statische Abdichtungsergebnis zwischen dem Innenring 2 und der Oberfläche der abgedichteten Welle wird hierdurch begünstigt, was sich vor allem vorteilhaft auswirkt, wenn häufig sehr große axiale Verlagerungen der Welle auftreten.

Der verbleibende Hohlraum zwischen dem Innenring und dem Außenring ist mit einem Schmierstoff gefüllt, der zu 93,8 % aus Graphit besteht und zu 6,2 % aus Polyglykolöl. Die Dichtung hat dadurch einen ausgezeichnete Leichtgängigkeit und gute Notlaufeigenschaften. Sie eignet sich ausgezeichnet zur Abdichtung einer Kurbelwelle.

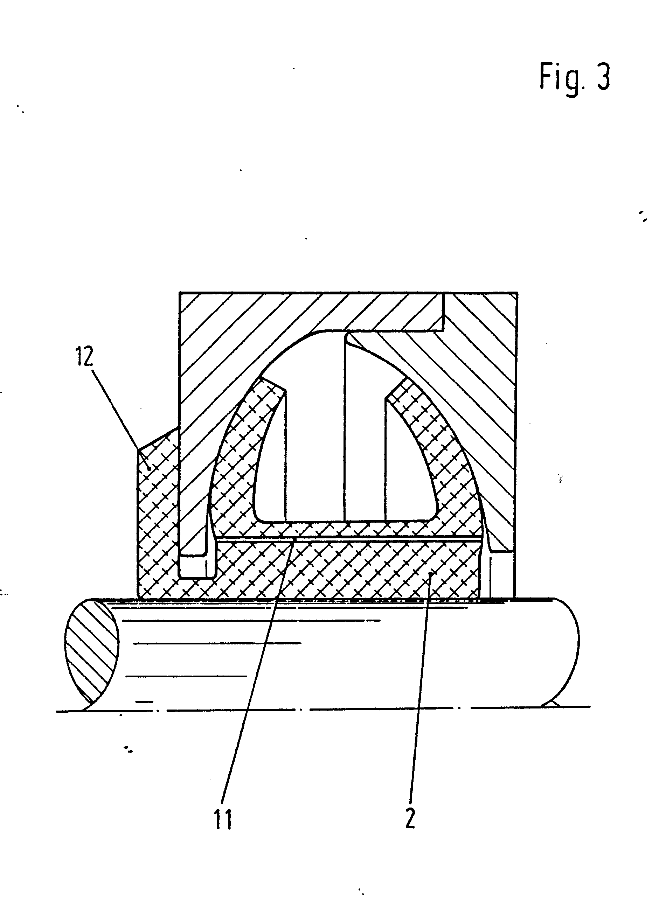

Die in Figur 3 gezeigte Ausführung ist der in Figur 2 gezeigten funktionell ähnlich. Der Außenring besteht in diesem Falle aus Sinterbronze und der Innenring aus PTFE, wodurch sich die Dichtung durch eine besonders gute Temperaturbeständigkeit auszeichnet.

Desweiteren ist die nach innen geöffnete Nut des Außenringes in axialer Richtung durch konkav in sich durchgewölbte Flächen begrenzt.

Die Dichtung vermag dadurch großen radialen, axialen und Winkelverlagerungen der abgedichteten Welle noch besser zu widerstehen als die vorstehend beschriebenen Ausführungen, wobei die diesbezüglich erzielten Gebrauchseigenschaften zusätzlich begünstigt werden durch die axiale Versteifung des Innenringes 2 durch die gleichmäßig auf den Umfang verteilten Messingstäbe 11. Eine auf der Außenseite der Dichtung angeordnete Staublippe 12 verhindert das Eindringen von Staub in den Innenraum der Dichtung. Die Erzielung einer guten Langlebigkeit wird hierdurch begünstigt.

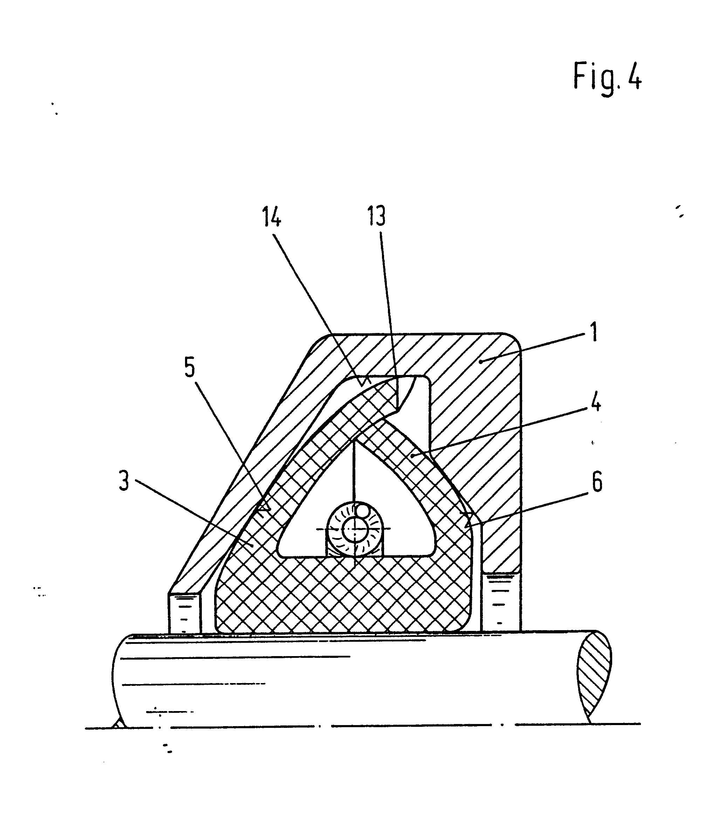

Figur 4 nimmt Bezug auf eine Ausführung, bei der das Profil des von dem abgedichteten Medium abgewandten Flansches 3 in radialer Richtung nach außen erweitert ist und den Außenring in dem zylindrisch ausgebildeten Abschnitt 13 mit einer weiteren Dichtfläche berührt.

Das Profil des Außenringes ist auf der dem abgedichteten Medium zugewandten Seite stufenartig ausgebildet, wodurch sich eine Verlagerung der Begrenzungsfläche 6 in radialer Richtung nach innen ergibt. Der an der Begrenzungsfläche 6 anliegende, druckseitig angeordnete Flansch 4 erfährt dadurch im Bereich seines Außenumfanges eine Abspreitzung und liegt unter einer elastischen Vorspannung an dem gegenüberliegenden Flansch 3 an. Dieser wird dadurch in besserem Maße an die zugeordneten Begrenzungsflächen 5, 14 des Außenringes 1 angepreßt, was das Abdichtungsergebnis verbessert. Zusätzlich ergibt sich eine Dämpfung beim Auftreten von Schwingungen, so daß auch in diesem Falle Undichtigkeiten nicht zu befürchten sind.

## Patentansprüche

1. Dichtung für den Spalt zwischen einer Bohrung und einer durch diese hindurch geführten Welle, bestehend aus einem flüssigkeitsdicht in der Bohrung gelagerten Außenring (1) aus festem Werkstoff, der eine nach innen geöffnete, umlaufende Nut mit zwei axialen Begrenzungsflächen (5, 6) aufweist, sowie aus einem Innenring (2, 3, 4) aus elastischem Werkstoff, der innerhalb der Nut flüssigkeitsdicht und verdrehsicher auf der Welle gelagert ist und der neben einem zylindrischen Mittelabschnitt (2) zwei nach außen vorspringende Flansche (3, 4) aufweist, die jeweils einer der Begrenzungsflächen der Nut zugeordnet sind, wobei die Begrenzungsflächen (5, 6) einen sich in radialer Richtung nach außen vermindernden Abstand haben und wobei jeder der beiden Flansche (3, 4) jeweils an der zugeordneten Begrenzungsfläche (5, 6) gleitend anliegt, dadurch gekennzeichnet, daß die radiale Dicke (B) des Mittelabschnittes (2) wenigstens 1,5 mal so groß ist wie der Abstand (A) zwischen dem Außenring (1) und der abgedichteten Welle auf der druckabgewandten Seite.

2. Dichtung nach Anspruch 1, dadurch gekennzeichnet, daß die Begrenzungsflächen (5, 6) durch konvergierende Kegelflächen gebildet werden.

3. Dichtung nach Anspruch 2, dadurch gekennzeichnet, daß in radialer Richtung nach außen wenigstens zwei Paar Kegelflächen mit sich verminderndem Kegelwinkel aufeinander folgen.

4. Dichtung nach Anspruch 1, dadurch gekennzeichnet, daß die Begrenzungsflächen (5, 6), bezogen auf die Rotationsachse, konvex in sich gewölbt sind.

5. Dichtung nach Anspruch 1, dadurch gekennzeichnet, daß die Begrenzungsflächen (5, 6), bezogen auf die Rotationsachse, konkav in sich gewölbt sind.

6. Dichtung nach einem der Ansprüche 1 bis 5, dadurch gekennzeichnet, daß der eine Flansch (3), der von dem abgedichteten Medium abgewandt ist, mit hydrodynamisch wirkenden Rückförderelementen (7) für Leckflüssigkeit versehen ist.

7. Dichtung nach Anspruch 6, dadurch gekennzeichnet, daß die Rückförderelemente (7) auf dem Außenumfang des einen Flansches (3) angeordnet sind.

8. Dichtung nach einem der Ansprüche 1 bis 7, dadurch gekennzeichnet, daß die der jeweiligen Begrenzungsfläche (5, 6) zugewandte Dichtfläche der Flansche (3, 4) in nicht eingebautem Zustand einen steileren Winkel mit der Rotationsachse einschließt als die Begrenzungsfläche.

9. Dichtung nach einem der Ansprüche 1 bis 8, dadurch gekennzeichnet, daß der Zwischenraum zwischen den Flanschen (3, 4) mit Schmierstoff gefüllt ist.

10. Dichtung nach einem der Ansprüche 1 bis 9, dadurch gekennzeichnet, daß in dem Zwischenraum der Flansche (3, 4) ein sekundäres Federelement (10) angeordnet ist, das unter einer elastischen Vorspannung an dem Außenumfang des Mittelabschnittes (2) des Innenringes anliegt.

11. Dichtung nach Anspruch 10, dadurch gekennzeichnet, daß das Federelement aus einer Ringwendelfeder besteht.

12. Dichtung nach einem der Ansprüche 1 bis 11, dadurch gekennzeichnet, daß der Innendurchmesser des Außenringes (1) auf der dem abzudichtenden Medium zugewandten Seite der Nut größer ist als auf der von dem abzudichtenden Medium abgewandten Seite.

13. Dichtung nach Anspruch 12, dadurch gekennzeichnet, daß der von dem abzudichtenden Medium abgewandte eine Flansch (3) einen größeren Außendurchmesser aufweist als der dem abzudichtenden Medium zugewandte andere Flansch (4).

14. Dichtung nach einem der Ansprüche 1 bis 13, dadurch gekennzeichnet, daß der Außendurchmesser des Mittelabschnittes (2) größer ist als der Innendurchmesser des Außenringes (1) auf der druckzugewandten Seite der Nut.

15. Dichtung nach einem der Ansprüche 1 bis 13, dadurch gekennzeichnet, daß der dem abgedichteten Medium zugewandte andere Flansch (4) den von dem abgedichteten Medium abgewandten einen Flansch (3) auf der von der zugehörigen Begrenzungsfläche (5) abgewandten Seite berührt.

16. Dichtung nach Anspruch 15, dadurch gekennzeichnet, daß der andere Flansch (4) an dem einen Flansch (3) unter elastischer Vorspannung anliegt.

**Claims**

1. A seal for the gap between a bore and a shaft passing through the bore, comprising an outer ring (1) which is mounted fluid-tight in the bore, is made of a rigid material and has an inwardly open, encircling groove with two axial boundary surfaces (5,6), and also comprising an inner ring (2, 3, 4) which is made of an elastic material, is mounted fluid-tight inside the groove and non-rotatably on the shaft and, next to a cylindrical centre section (2), has two outwardly projecting flanges (3, 4) which are each allocated to one of the boundary surfaces of the groove, with the boundary surfaces (5, 6) being at a distance from one another which decreases outwards in the radial direction and with each of the two flanges (3, 4) bearing in a sliding manner against the allocated boundary surface (5, 6), characterised in that the radial thickness (B) of the centre section (2) is at least 1.5 times as large as the distance (A) between the outer ring (1) and the sealed shaft on the side remote from pressure.

2. A seal according to claim 1, characterised in that the boundary surfaces (5, 6) are formed by converging conical surfaces.

3. A seal according to claim 2, characterised in that at least two pairs of conical surfaces with a decreasing conical angle follow one another outwards in the radial direction.

4. A seal according to claim 1, characterised in that the boundary surfaces (5, 6) are arched in on themselves in a convex manner with respect to the axis of rotation.

5. A seal according to claim 1, characterised in that the boundary surfaces (5, 6) are arched in on themselves in concave manner with respect to the axis of rotation.

6. A seal according to any one of claims 1 to 5, characterised in that the flange (3) remote from the sealed medium is provided with hydrodynamically acting return elements for leakage fluid.

7. A seal according to claim 6, characterised in that the return elements (7) are arranged on the outer periphery of one flange (3).

8. A seal according to any one of claims 1 to 7, characterised in that the sealing surface of the flanges (3, 4), which sealing surface faces towards the respective boundary surface (5, 6), encloses in the non-installed condition a steeper angle with the axis of rotation than the boundary surface.

9. A seal according to any one of claims 1 to 8, characterised in that the intermediate space between the flanges (3, 4) is filled with lubricant.

10. A seal according to any one of claims 1 to 9, characterised in that a secondary spring element (10) is arranged in the intermediate space of the flanges (3, 4), which secondary spring element (10) sits under elastic pre-tension against the outer periphery of the centre section (2) of the inner ring.

11. A seal according to claim 10, characterised in that the spring element consists of an annular helical spring.

12. A seal according to any one of claims 1 to 11, characterised in that the inside diameter of the outer ring (1) is greater on the groove side facing towards the medium to be sealed than on the side remote from the medium to be sealed.

13. A seal according to claim 12, characterised in that the flange (3) remote from the medium to be sealed has a larger outside diameter than the other flange (4) facing towards the medium to be sealed.

14. A seal according to any one of claims 1 to 13, characterised in that the outside diameter of the centre section (2) is larger than the inside diameter of the outer ring (1) on the groove side facing towards the pressure.

15. A seal according to any one of claims 1 to 13, characterised in that the other flange (4) facing towards the sealed medium contacts the flange (3) remote from the sealed medium on the side remote from the associated boundary surface (5).

16. A seal according to claim 15, characterised in that the other flange (4) sits under elastic pretension against the flange (3).


**Revendications**

1. Joint pour le jeu entre un alésage et l'arbre traversant celui-ci, constitué d'une bague extérieure (1) en matériau solide, étanche au liquide et placée dans l'alésage, qui présente une rainure périphérique ouverte avec deux surfaces limites axiales (5, 6) ainsi qu'une bague intérieure (2, 3, 4) en matériau élastique qui est montée sur l'arbre à l'intérieur de la rainure, de manière étanche au liquide et sans possibilité de rotation et qui présente, outre une section centrale cylindrique (2), deux brides (3, 4) en saillie vers l'extérieur qui correspondent chacune à une surface limite de la rainure tandis que les surfaces limites (5, 6) ont une distance diminuant vers l'extérieur en direction radiale et où chacune des deux brides (3, 4) appuient avec glissement sur les surfaces limites correspondantes (5, 6), caractérisé en ce que l'épaisseur radiale (B) de la section centrale (2) est au moins 1, 5 fois aussi grande que la distance (A) entre la bague extérieure (1) et l'arbre à rendre étanche du côté opposé à la pression.

2. Joint selon la revendication 1, caractérisé en ce que les surfaces limites (5, 6) sont constituées par des surfaces côniques convergentes.

3. Joint selon la revendication 2, caractérisé en ce que au moins deux paires de surfaces côniques se succèdent l'une à l'autre vers l'extérieur en direction radiale avec des angles de cône en diminution.

4. Joint selon la revendication 1, caractérisé en ce que les surfaces limites (5, 6) sont cintrées avec une convexité tournée vers l'axe de rotation.

5. Joint selon la revendication 1, caractérisé en ce que les surfaces limites sont cintrées avec une concavité tournée vers l'axe de rotation.

6. Joint selon les revendications 1 à 5, caractérisé en ce que la bride (3) opposée au fluide à contenir est pourvue d'éléments de renvoi (7) à effet hydrodynamique destinés au liquide de fuite.

7. Joint selon la revendication 6, caractérisé en ce que les éléments de renvoi (7) sont disposés sur la périphérie extérieure d'une bride (3).

8. Joint selon l'une des revendications 1 à 7, caractérisé en ce que les surfaces d'étanchéité des brides (3, 4) tournées vers les surfaces limites correspondantes (5, 6) forment avec l'axe de rotation un angle plus droit à l'état non monté que la surface limite.

9. Joint selon l'une des revendications 1 à 8, caractérisé en ce que l'enceinte intermédiaire entre les brides (3, 4) est remplie d'un lubrifiant.

10. Joint selon l'une des revendications 1 à 9, caractérisé en ce que un élément elastique secondaire (10) est disposé dans l'enceinte intermédiaire des brides (3, 4) de façon à appuyer sous précontrainte élastique sur la périphérie extérieure de la section centrale (2) de la bague intérieure.

11. Joint selon la revendication 10, caractérisé en ce que l'élément élastique est constitué d'un ressort hélicoïdal.

12. Joint selon l'une des revendications 1 à 11, caractérisé en ce que le diamètre intérieur de la bague extérieure (1) est plus grand du côté de la rainure tournée vers le fluide à contenir que du côté opposé au fluide à contenir.

13. Joint selon la revendication 12, caractérisé en ce que la bride (3) opposée au fluide à contenir présente un plus grand diamètre extérieur que l'autre bride (4) tournée vers le fluide à contenir.

14. Joint selon l'une des revendications 1 à 13, caractérisé en ce que le diamètre extérieur de la section centrale (2) est plus grand que le diamètre intérieur de la bague extérieure (1) du côté de la rainure tournée vers la pression.

15. Joint selon l'une des revendications 1 à 13, caractérisé en ce que l'autre bride (4) tournée vers le fluide à contenir vient au contact de la bride (3) opposée au fluide à contenir du côté opposé à la surface limite correspondante (5).

16. Joint selon la revendication 15, caractérisé en ce que l'autre bride (4) appuie contre la bride (3) sous précontrainte élastique.

Fig. 1

Fig. 2

Fig. 3

12

11        2

Fig. 4